# EUROPEAN PATENT SPECIFICATION

(11) **EP 4 339 663 B1**
(45) Date of publication and mention of the grant of the patent: **08.07.2026**
(21) Application number: 23194985.0
(22) Date of filing: 01.09.2023
(51) Int. Cl.: G02B 5/28, G02B 27/01

(54) **AUGMENTED REALITY GLASSES BASED ON TWO-PHOTON VISION**
BRILLE FÜR ERWEITERTE REALITÄT AUF BASIS VON ZWEIPHOTONENSICHT
LUNETTES À RÉALITÉ AUGMENTÉE BASÉES SUR LA VISION À DEUX PHOTONS

(30) Priority: 02.09.2022 EP 22193796
(43) Date of publication of application: 20.03.2024
(73) Proprietor: Instytut Chemii Fizycznej PAN, 01-224 Warszawa (PL)
(72) Inventor: Komar, Katarzyna, 87-800 Wloclawek (PL); Wojtkowski, Maciej, 87-100 Torun (PL); Marzejon, Marcin, 02-114 Warszawa (PL)
(74) Representative: JD&P Patent Attorneys Joanna Dargiewicz & Partners

(56) References cited:
- US-A1- 2017 205 876
- US-A1- 2019 317 598
- GRAZYNA PALCZEWSKA ET AL: "Human infrared vision is triggered by two-photon chromophore isomerization", PROCEEDINGS OF THE NATIONAL ACADEMY OF SCIENCES, vol. 111, no. 50, 1 December 2014 (2014-12-01), pages E5445 - E5454, XP055387683, ISSN: 0027-8424, DOI: 10.1073/pnas.1410162111
- RUMINSKI DANIEL ET AL: "Two-photon microperimetry: sensitivity of human photoreceptors to infrared light", BIOMEDICAL OPTICS EXPRESS, vol. 10, no. 9, 9 August 2019 (2019-08-09), United States, pages 4551, XP093129494, ISSN: 2156-7085, DOI: 10.1364/BOE.10.004551

## Description

### Field of the Invention

The present invention relates to the augmented reality glasses based on two-photon vision. The present Inventors propose a new technology of optical see-through displays (OSD), optical head-mounted displays (HMD), and near-eye displays (NED). The solution refers to the virtual retinal display concept [US6008781A].

### Background of the Invention

### Prior Art

The optical see-through displays (OSD), where the virtual objects are displayed directly in the view of the external, real-world, and near-eye displays (NED) presented so far, consist of the following components:
- image generator: a laser beam or beams or other source of photons which is scanned in a raster type of pattern by scanning mirrors as 2D MEMS with modulation of intensity in time [example: US20230090636A1]; and/or a light-modulating device illuminated by a light source/sources as liquid crystal display (LCD), liquid-crystal on silicon (LCOS), and DLP-based systems consisting of the digital micromirror device (DMD) and a DLP driver; and/or a display which emits light (array of organic light-emitting diodes (OLEDs);
- optical combiner: an optical element that merges light from outside world and light generated by image generator; it can be realized by: simple optical beam splitter, so-called birdbath optics [example: EP2948813A1], so-called pin optics [examples: US10989922B2, US10989921B2] and planar optical waveguides (diffractive, reflective, polarized or holographic) [examples: US10353202B2; US10197804B2; US11204503B2; US11448937B2; US8155489B2; EP3757660B1; EP3391127B1; EP2887128B1; US8885997B2; US20060126181A1; EP2033040B1; EP1828832B1; CN109656026B; JP6598269B2; US11194159B2]
- imaging optics: a pupil-forming optical system producing an intermediate image at some point between the image generator and the eye, which can be modified by a light-modulating device placed between the image generator and the eye or non-pupil-forming optical system that provides collimated light to the eye to create the image at infinity under relaxed-eye viewing conditions.

The available solutions are based on a light source or sources perceived by the eye due to normal, one-photon vision. It limits the wavelengths of light generated by the image generator to the so-called visible range (400-700 nm). As the visible stimulus is used, many multiple-deflected images and scattering from the optical combiner and imaging optics may appear in the image. This decreases the quality of the image and the comfort of the user. Many of the solutions use optical waveguides that deflect the stimulating beam. As both (1) the light to deliver AR information and (2) the light from the surrounding world are in the same (visible) range of wavelengths, the following limitations can be found:
- the image of the surrounding world is significantly dimmer compared to conventional glasses as the transparency of the beam splitter or other combining element is decreased - e.g., Google Glass [examples: US20130207887A1, US20130070338A1]
- it can be seen that the user of the glasses has some image displayed [OPPO Air Glass, https://www.youtube.com/watch?v=DMQUDSk_4B0];
- there is a need to use a bright stimulus for information presentation (due to reflection losses), which is a technical challenge.

The present invention aimed to overcome the problems of the solutions known from the prior art by applying another way of perception of light called two-photon vision, which extends the range of electromagnetic radiation to the near-infrared range (800-1400 nm).

Further prior art US 2019/317598 A1 discloses an OSD with eye tracking using infrared radiation.

### Summary of the Invention

The subject of the present invention is the use of light in the 800-1400 nm range (NIR), as perceived by two-photon vision, in the image generator to display AR information at the human retina. In particular the subject of the present invention are augmented reality glasses based on the two-photon vision comprising at least one optical combiner, which includes a part or parts of a dichroic material or part of the image combiner, can be mounted together with such dichroic optics, for example, a dichroic mirror, or any other optical solution that would reflect or deflect the NIR beam into the eye but transmit the visible light coming from the outside world, avoiding the loss of intensity for normal vision, and at least one image generator, which consists of at least one source of the NIR beam.

The augmented reality glasses based on the two-photon vision, according to the invention are characterized in that the source of the IR beam is a pulsed NIR radiation source unit.

Preferably the augmented reality glasses based on the two-photon vision, according to the invention are characterized in that the source of the IR beam is a pulsed NIR radiation source unit with a wavelength range from 800 nm to 1400 nm.

Preferably the augmented reality glasses based on the two-photon vision, according to the invention are characterized in that the source of the NIR beam is a pulsed NIR radiation source unit with a pulse duration of 10 ns or shorter.

Preferably the augmented reality glasses based on the two-photon vision, according to the invention are characterized in that source of the IR beam the source of the IR beam is a pulsed NIR radiation source unit with a pulse repetition rate of at least 100 kHz.

Preferably the augmented reality glasses based on the two-photon vision according to the invention are characterized in that the optical combiner is transparent for visible spectrum range and efficiently reflects/deflects near-infrared radiation of desired wavelength range.

Preferably the augmented reality glasses based on the two-photon vision according to the invention are characterized in that they comprise one or more pulsed near-infrared sources of the same or different spectral properties.

Preferably the augmented reality glasses based on the two-photon vision, according to the invention are characterized in that the NIR beam is focused on the user's retinal plane.

Preferably the augmented reality glasses based on the two-photon vision, according to the invention are characterized in that the displayed information is perceived by the user in a two-photon vision mechanism.

Finally the augmented reality glasses based on the two-photon vision, according to the invention are characterized in that the augmented reality is not visible to the third party.

### Brief description of the figures

The present invention and its embodiments are shown in the following figures wherein:

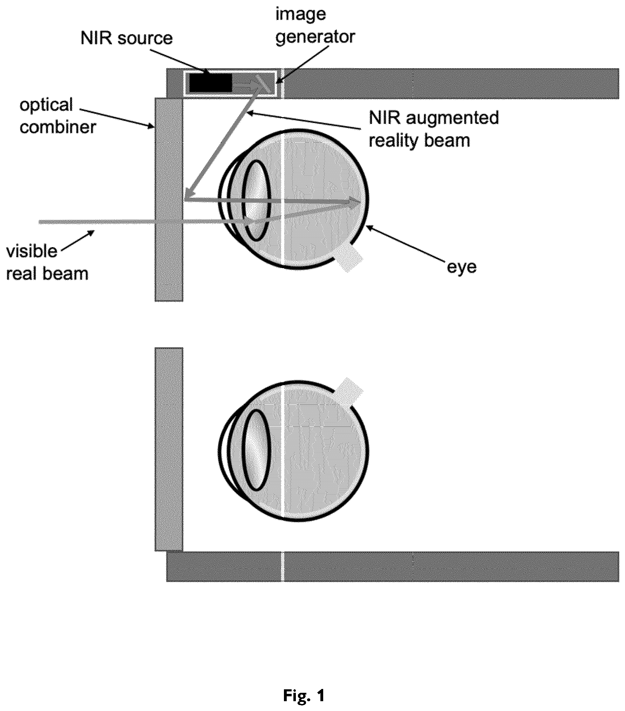

Fig. 1 shows a schematic view of the augmented reality glasses based on the two-photon vision according to the present invention;
Fig. 2 shows the embodiments of the present invention according to examples 1-3; and
Fig. 3 shows the embodiments of the present invention according to examples 4-6.

The present invention is based on replacing the visible light source with an infrared one with the emitted wavelengths equivalent to double the wavelengths (e.g., to double RGB-corresponding wavelengths - approx. 450 nm, 500 nm, and 650 nm - in the order of approximately 900 nm, 1000 nm, and 1300 nm, but not limited to those values). This way it can be utilized the principle of two-photon vision, described in the state of the art:
1. G. Palczewska, F. Vinberg, P. Stremplewski, M. P. Bircher, D. Salom, K. Komar, J. Zhang, M. Cascella, M. Wojtkowski, V. J. Kefalov, and K. Palczewski, "Human infrared vision is triggered by two-photon chromophore isomerization," Proc. Natl. Acad. Sci. U. S. A. 111(50), E5445-E5454 (2014).
2. Daniel Ruminski, Grazyna Palczewska, Maciej Nowakowski, Agnieszka Zielińska, Vladimir J. Kefalov, Katarzyna Komar, Krzysztof Palczewski, and Maciej Wojtkowski, "Two-photon microperimetry: sensitivity of human photoreceptors to infrared light," Biomed. Opt. Express 10, 4551-4567 (2019).
3. A. Zielińska, P. Ci 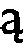 cka, M. Szkulmowski, and K. Komar; "Pupillary Light Reflex induced by two-photon vision"; Invest. Ophthalmol. Vis. Sci. 2021; 62(15):23; 33107
4. M. J. Marzejon, 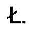 Kornaszewski, M. Wojtkowski, K. Komar; "Laser pulse train parameters determine the brightness of a two-photon stimulus"; Biomed. Opt. Express 14 (6), 2857-2872 (2023)

The image combiner in the two-photon vision-based augmented reality glasses may include a part or parts of a dichroic material or part of the image combiner can be mounted together with such dichroic optic, for example, a dichroic mirror, or any other optical solution that would reflect or deflect the NIR beam into the eye but transmit the visible light coming from the outside world, avoiding the loss of intensity for normal vision. The NIR beam coming from an image generator would cause a visual sensation due to two-photon vision augmented on the retina with that coming from real-world visible light.

The present invention has the following unique features:
- The information is displayed using a pulsed near-infrared stimulus (wavelength range from 800 nm to 1400 nm) with a pulse duration of 10 ns or shorter and a pulse repetition rate of 100 kHz or higher.
- The optical combiner deflects the NIR beam emitted from the image generator to the eye. The optical combiner is transparent for the visible range of the light.
- The image generator may consist of one or more NIR pulsed sources of the same, or different spectral properties may be applied.
- The NIR beam(s) is(are) focused on the user's retinal plane.
- The displayed information is perceived by the user in a nonlinear vision mechanism - two-photon vision.

The present invention solves the problems of the prior art by:
- Using near-infrared stimulus, the optical combiner will not affect the brightness of the surrounding world. Because the present invention operates in two different spectral ranges (near-infrared for stimulus and visible light for the surrounding world), it is possible to effectively reflect/deflect the NIR pulsed stimulating beam into the user's eye and pass the visible range light from the environment.
- The scattered and multiply reflected NIR light will not be perceived by the user because the two-photon vision is a nonlinear optical process and requires sufficient power density of the light, which can be achieved only in the focal region of the stimulating beam.
- The quadratic dependence of stimulus brightness on the power of the stimulating beam causes the available dynamic range of stimulus brightness to be greater.
- The contrast sensitivity for a two-photon stimulus displayed on a visible background is higher [O. Kaczkos, A. Zielinska, M. Marzejon, J. Pniewski, M. Wojtkowski, and K. Komar, "Exploring the contrast sensitivity function for two-photon vision," Invest. Ophthalmol. Vis. Sci. 64(8), 1495 (2023)].
- As two-photon vision depends on the power density level, it will not be visible to the third party that the person uses smart glasses and has some information displayed [G. Palczewska, F. Vinberg, P. Stremplewski, M. P. Bircher, D. Salom, K. Komar, J. Zhang, M. Cascella, M. Wojtkowski, V. J. Kefalov, and K. Palczewski, "Human infrared vision is triggered by two-photon chromophore isomerization," Proc. Natl. Acad. Sci. U. S. A. 111(50), E5445-E5454 (2014); M. J. Marzejon, 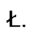 Kornaszewski, M. Wojtkowski, and K. Komar, "Laser pulse train parameters determine the brightness of a two-photon stimulus," Biomed. Opt. Express **14**(6), 2857-2872 (2023)].
- The natural pupillary reflex will be less affected as the pupillary reflex for nonlinear vision phenomenon is significantly smaller compared to normal vision [A. Zielinska, P. Ciaćka, M. Szkulmowski, and K. Komar, "Pupillary Light Reflex Induced by Two-Photon Vision," Investig. Ophthalmol. Vis. Sci. 62(15), (2021)].

The benefits of the present invention are as follows:
- Better image sharpness due to the two-photon effect nonlinearity - stray light does not cause the eye reaction, causing better contrast and acuity.
- Only the properly focused beam is being perceived - immediate information if the emitted AR component is not overlaid on the image properly.
- The pupil is reacting to the IR beam much less than for visible light, making it easier to introduce the beam into the eye because the pupil is not contracted.
- There are no losses for the transmitted real visible light due to the use of a dichroic optics system.

### EXAMPLES

### Example 1

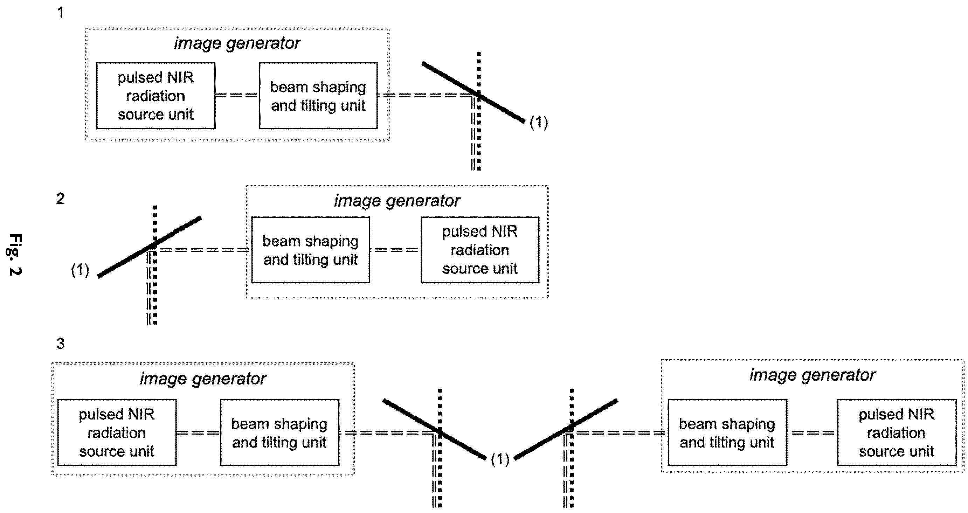

A pulsed near-infrared radiation is produced by the *pulsed NIR radiation source unit,* then shaped into a stimulus and steered to the desired position by *the beam shaping and tilting unit,* and deflected into the user's left eye using an optical combiner (1); note that the combiner is transparent for the visible radiation (Fig. 2 point 1).

### Example 2

A pulsed near-infrared radiation is produced by the *pulsed NIR radiation source unit,* then shaped into a stimulus and steered to the desired position by *the beam shaping and tilting unit,* and deflected into the user's right eye using an optical combiner (1); note that the combiner is transparent for the visible radiation (Fig. 2 point 2).

### Example 3

Two or more units may be combined (Fig. 2 point 3).

### Example 4

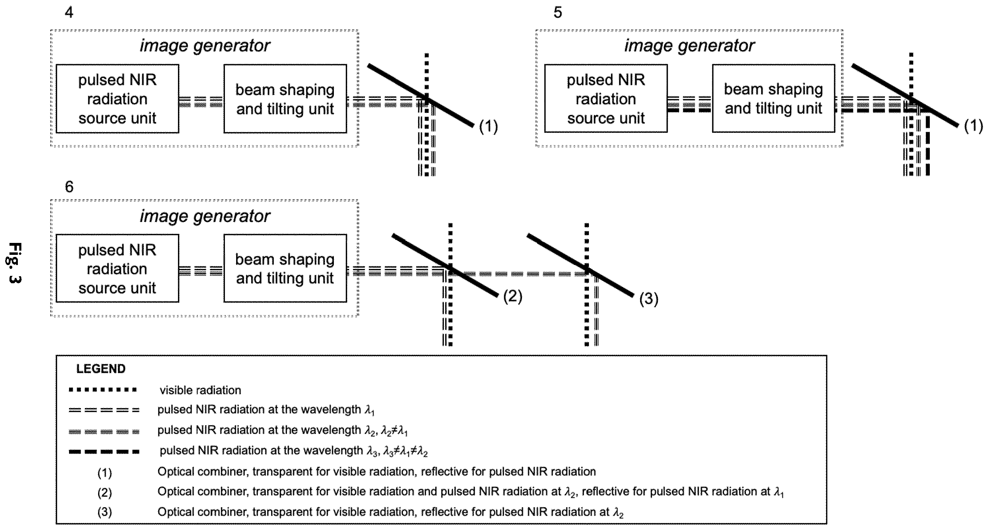

A pulsed near-infrared radiation at two different wavelengths is produced by the *pulsed NIR radiation source unit,* then shaped into a stimulus and steered to the desired position by *beam shaping and tilting unit,* and deflected into the user's eye using an optical combiner (1); note that the combiner is transparent for the visible radiation; note that there may be more than two different wavelengths produced by the *pulsed NIR radiation source unit* (Fig. 3 point 4).

### Example 5

A pulsed near-infrared radiation at three different wavelengths is produced by the *pulsed NIR radiation source unit,* then shaped into a stimulus and steered to the desired position by *beam shaping and tilting unit,* and deflected into the user's eye using an optical combiner (1); note that the combiner is transparent for the visible radiation; note that there may be more than three different wavelengths produced by the *pulsed NIR radiation source unit* (Fig. 3 point 5).

### Example 6

Pulsed near-infrared radiation at two different wavelengths is produced by the *pulsed NIR radiation source unit,* then shaped into a stimulus and steered to the desired position by *beam shaping and tilting unit,* and deflected into the user's eye (one or both) using an optical combiner: (2) - reflective for *λ*₁ and transparent for *λ*₂, and (3) - reflective for *λ*₂; note that the elements (2) and (3) are transparent for the visible radiation (Fig. 3 point 6).

## Claims

1. An augmented reality glasses based on the two-photon vision comprising:
- at least one optical combiner,
wherein the optical combiner includes a part or parts of a dichroic material or
wherein part of the optical combiner, is mounted together with a dichroic optics, such as for example, a dichroic mirror, or any other optical solution that would reflect or deflect a NIR beam into the eye but transmit the visible light coming from the outside world,
wherein the at least one optical combiner is configured to avoid the loss of intensity for normal vision; and
- at least one image generator, which consists of at least one source of the NIR beam wherein the source of the IR beam is a pulsed NIR radiation source unit.

2. The augmented reality glasses based on the two-photon vision, according to claim 1, **characterized in that** the source of the IR beam is a pulsed NIR radiation source unit with a wavelength range from 800 nm to 1400 nm.

3. The augmented reality glasses based on the two-photon vision, according to claim 1 or 2, **characterized in that** the source of the NIR beam is a pulsed NIR radiation source unit with a pulse duration of 10 ns or shorter.

4. The augmented reality glasses based on the two-photon vision, according to any of claims 1-3, **characterized in that** source of the IR beam the source of the IR beam is a pulsed NIR radiation source unit with a pulse repetition rate of at least 100 kHz.

5. The augmented reality glasses based on the two-photon vision according to any of claims 1-4, **characterized in that** the optical combiner (1) is transparent for visible spectrum range and efficiently reflects/deflects near-infrared radiation of desired wavelength range.

6. The augmented reality glasses based on the two-photon vision according to any of claims 1-5, **characterized in that** they comprise one or more pulsed near-infrared sources of the same or different spectral properties.

7. The augmented reality glasses based on the two-photon vision, according to any of claims 1-6, **characterized in that** the NIR beam is focused on the user's retinal plane.

8. The augmented reality glasses based on the two-photon vision, according to any of claims 1-7, **characterized in that** the displayed information is perceived by the user in a two-photon vision mechanism.

9. The augmented reality glasses based on the two-photon vision, according to any of claims 1-8, **characterized in that** the augmented reality is not visible to the third party.

## Patentansprüche

1. Augmented-Reality-Brille basierend auf dem Zwei-Photonen-Sehen, umfassend:
- mindestens einen optischen Kombinator, wobei der optische Kombinator einen Teil oder Teile eines dichroitischen Materials beinhaltet oder wobei ein Teil des optischen Kombinators zusammen mit einer dichroitischen Optik wie zum Beispiel einem dichroitischen Spiegel oder einer anderen optischen Lösung montiert ist, die einen NIR-Strahl in das Auge reflektieren oder ablenken würde, aber das sichtbare Licht, das von der Außenwelt kommt, durchlassen würde, wobei der mindestens eine optische Kombinator konfiguriert ist, um den Verlust der Intensität für normales Sehen zu vermeiden; und
- mindestens einen Bildgenerator, der aus mindestens einer Quelle des NIR-Strahls besteht, wobei die Quelle des IR-Strahls eine gepulste NIR-Strahlungsquelleneinheit ist.

2. Augmented-Reality-Brille basierend auf dem Zwei-Photonen-Sehen nach Anspruch 1, **dadurch gekennzeichnet, dass** die Quelle des IR-Strahls eine gepulste NIR-Strahlungsquelleneinheit mit einem Wellenlängenbereich von 800 nm bis 1400 nm ist.

3. Augmented-Reality-Brille basierend auf dem Zwei-Photonen-Sehen nach Anspruch 1 oder 2, **dadurch gekennzeichnet, dass** die Quelle des NIR-Strahls eine gepulste NIR-Strahlungsquelleneinheit mit einer Pulsdauer von 10 ns oder kürzer ist.

4. Augmented-Reality-Brille basierend auf dem Zwei-Photonen-Sehen nach einem der Ansprüche 1-3, **dadurch gekennzeichnet, dass** die Quelle des IR-Strahls eine gepulste NIR-Strahlungsquelleneinheit mit einer Pulswiederholungsrate von mindestens 100 kHz ist.

5. Augmented-Reality-Brille basierend auf dem Zwei-Photonen-Sehen nach einem der Ansprüche 1-4, **dadurch gekennzeichnet, dass** der optische Kombinator (1) für den sichtbaren Spektralbereich transparent ist und Nahinfrarotstrahlung des gewünschten Wellenlängenbereichs effizient reflektiert/ablenkt.

6. Augmented-Reality-Brille basierend auf dem Zwei-Photonen-Sehen nach einem der Ansprüche 1-5, **dadurch gekennzeichnet, dass** sie eine oder mehrere gepulste Nahinfrarotquellen mit den gleichen oder unterschiedlichen spektralen Eigenschaften umfasst.

7. Augmented-Reality-Brille basierend auf dem Zwei-Photonen-Sehen nach einem der Ansprüche 1-6, **dadurch gekennzeichnet, dass** der NIR-Strahl auf die Netzhautebene des Benutzers fokussiert ist.

8. Augmented-Reality-Brille basierend auf dem Zwei-Photonen-Sehen nach einem der Ansprüche 1-7, **dadurch gekennzeichnet, dass** die angezeigte Information durch den Benutzer in einem Zwei-Photonen-Sehmechanismus wahrgenommen wird.

9. Augmented-Reality-Brille basierend auf dem Zwei-Photonen-Sehen nach einem der Ansprüche 1-8, **dadurch gekennzeichnet, dass** die Augmented-Reality für den Dritten nicht sichtbar ist.

## Revendications

1. Une lunettes de réalité augmentée basées sur la vision à deux photons comprenant :
- au moins un combineur optique, dans lequel le combineur optique inclut une partie ou des parties d'un matériau dichroïque ou dans lequel une partie du combineur optique est montée conjointement avec une optique dichroïque, telle que par exemple, un miroir dichroïque, ou toute autre solution optique qui réfléchirait ou dévierait un faisceau PIR vers l'œil mais transmettrait la lumière visible provenant du monde extérieur, dans lequel l'au moins un combineur optique est configuré pour éviter la perte d'intensité pour une vision normale ; et
- au moins un générateur d'image, qui consiste en au moins une source du faisceau PIR dans lequel la source du faisceau PIR est une unité de source de rayonnement PIR pulsé.

2. Les lunettes de réalité augmentée basée sur la vision à deux photons, selon la revendication 1, **caractérisées en ce que** la source du faisceau IR est une unité de source de rayonnement PIR pulsé avec une gamme de longueurs d'onde de 800 nm à 1400 nm.

3. Les lunettes de réalité augmentée basée sur la vision à deux photons, selon la revendication 1 ou 2, **caractérisées en ce que** la source du faisceau IR est une unité de source de rayonnement avec une durée d'impulsion de 10 ns ou moins.

4. Les lunettes de réalité augmentée basée sur la vision à deux photons, selon l'une quelconque des revendications 1 à 3, **caractérisées en ce que** source du faisceau IR est une unité de source de rayonnement avec un taux de répétition d'impulsion d'au moins 100 kHz.

5. Les lunettes de réalité augmentée basée sur la vision à deux photons, selon l'une quelconque des revendications 1 à 4, **caractérisées en ce que** le combineur optique (1) est transparent dans le spectre du visible et réfléchit/dévit efficacement le rayonnement proche infra-rouge de la plage de longueurs d'ondes désirée.

6. Les lunettes de réalité augmentée basée sur la vision à deux photons, selon l'une quelconque des revendications 1 à 5, **caractérisées en ce qu'**elles comprennent une ou plusieurs sources proche infrarouge pulsées de propriétés spectrales identiques ou différentes.

7. Les lunettes de réalité augmentée basée sur la vision à deux photons, selon l'une quelconque des revendications 1 à 6, **caractérisées en ce que** le faisceau PIR est focalisé sur le plan rétinien de l'utilisateur.

8. Les lunettes de réalité augmentée basée sur la vision à deux photons, selon l'une quelconque des revendications 1 à 7, **caractérisées en ce que** l'information affichée est perçue par l'utilisateur selon un mécanisme de vision à deux photons.

9. Les lunettes de réalité augmentée basée sur la vision à deux photons, selon l'une quelconque des revendications 1 à 8, **caractérisées en ce que** la réalité augmentée n'est pas visible par les tiers.
